# EUROPÄISCHE PATENTANMELDUNG

(11) **EP 1 394 023 A1**
(43) Veröffentlichungstag der Anmeldung: **03.03.2004**
(21) Anmeldenummer: 03019115.9
(22) Anmeldetag: 23.08.2003
(51) Int. Cl.: B62D 59/04

(54) **Anhänger mit Selbstfahrantrieb**

(30) Priorität: 02.09.2002 DE 10240369
(71) Anmelder: Neuhäuser GmbH, 44532 Lünen (DE)
(72) Erfinder: Greiwe, Christoph, 48301 Nottuin (DE)
(74) Vertreter: Nunnenkamp, Jörg, Dr.

(57) **Zusammenfassung**

Gegenstand der vorliegenden Erfindung ist ein Anhänger, insbesondere Einachs-Lastanhänger mit Deichsel (1) als mobiles Reinigungsgerät. Der Anhänger verfügt über eine Energiequelle (2) und einen Selbstfahrantrieb (5). Erfindungsgemäß ist der Selbstfahrantrieb (5) als Reibradantrieb (5) für wenigstens ein Anhängerrad (6) ausgebildet.

## Beschreibung

Die Erfindung betrifft einen Anhänger, insbesondere Einachs-Lastanhänger mit Deichsel als mobiles Reinigungsgerät, mit einer Energiequelle und wenigstens einem Selbstfahrantrieb, welcher als Reibradantrieb für zumindest ein Anhängerrad ausgebildet ist, wobei der Reibradantrieb eine Antriebseinheit inklusive Antriebswalze und zusätzlich eine angeschlossene Feder aufweist, welche sich gegenüber einem Fahrgestell abstützt und wobei zwei oder mehr Reibradantriebe vorgesehen sind.

Ein Anhänger der eingangs beschriebenen Gestalt wird im Rahmen der US-PS 4 596 300 erläutert. Dort geht es darum, einen Waffentransportanhänger rangierend zu verfahren. Hierzu sind zwei unterschiedliche Reibradantriebe an einem Rahmen bzw. dort vorgesehenen Zwillingsreifen bzw. Einfachreifen vorgesehen. Beliebige Fahrstrecken lassen sich mit dem bekannten Anhänger nicht unmittelbar absolvieren, weil die mit jeweils Reibradantrieb ausgerüsteten Anhängerräder diagonal gegenüberliegend angeordnet sind.

Darüber hinaus wird eine vergleichbare Antriebseinheit im Rahmen der DE 37 36 788 A1 beschrieben. Hier geht es um einen Hilfsantrieb für Fahrzeuge ohne eigenen Antrieb, welcher beispielsweise zum Rangieren dient. Dazu ist ein Elektro- oder Verbrennungsmotor mit integriertem Untersetzungsgetriebe mit dem betreffenden Fahrzeug lösbar verbunden. In einem Ausführungsbeispiel wird die Antriebsenergie eines zugehörigen Motors bzw. Elektromotors auf das Laufrad mittels eines Reibrades steuerbar übertragen. Das Reibrad ist auf das Laufrad schwenkbar ausgebildet und kann in beiden Endpositionen arretiert werden.

Eine ähnliche Antriebseinheit für ein Fahrzeug bzw. Anhänger wird im Rahmen der DE 196 22 505 C2 beschrieben. Diese bekannte Antriebseinheit verfügt über einen Elektromotor sowie zwei Antriebsräder, wobei die gesamte Antriebseinheit um eine senkrechte Achse schwenkbar ist. Sie lässt sich als Baugruppe samt Elektromotor sowie Getriebe beispielsweise gegen üblicherweise vorhandene Lenkachsen von Handhubwagen ersetzen, so dass auf diese Weise solche Handhubwagen in elektromotorisch angetriebene Gehhubwagen umgerüstet werden können.

Der Stand der Technik kann nicht in allen Punkten befriedigen, weil bei der zuvor behandelten Lehre die bekannte Antriebseinheit nachrüstbar ist. Dadurch ergeben sich Unzuträglichkeiten, was den industriellen, rauen Arbeitseinsatz angeht. Im Übrigen besteht die Gefahr, dass bei dem bekannten Hilfsantrieb nach der DE 37 36 788 A1 das Reibrad gegenüber dem Laufrad bzw. Anhängerrad schlupft, so dass ebenfalls die Funktionsweise beeinträchtigt ist.

Durch die EP 0 827 898 A1 ist ebenfalls ein Hilfsantrieb für langsame Manövriertätigkeiten von Anhängern bekannt geworden. Ebensolches gilt unter Berücksichtigung der FR 2 786 456 A1. Dort wirkt der Selbstfahrantrieb auf eine an einer Deichsel angebrachte und folglich schwenkbare Achse.

Schließlich beschäftigt sich die DE 27 11 214 A1 mit einem Hilfsantrieb für nicht angetriebene Räder von Kraftfahrzeugen. Ein Anhängerantrieb wird nicht erwähnt.

Der Erfindung liegt das technische Problem zugrunde, einen Anhänger der eingangs beschriebenen Gestaltung so weiterzuentwickeln, dass ein besonders robuster und funktionssicherer Selbstfahrantrieb zur Verfügung gestellt wird.

Zur Lösung dieser technischen Problemstellung ist ein gattungsgemäßer Anhänger im Rahmen der Erfindung dadurch gekennzeichnet, dass jeweils ein Reibradantrieb für je ein Anhängerrad einer feststehenden Achse an jeder Anhängerseite realisiert ist, wobei die beiden Reibradantriebe mit gleicher oder unterschiedlicher Geschwindigkeit laufen, so dass der Anhänger beliebige Fahrstrecken absolvieren kann.

Erfindungsgemäß arbeiten die beiden Reibradantriebe also auf jeweils ein Anhängerrad an jeder Anhängerseite einer feststehenden Achse. Die Reibradantriebe wirken also nicht eine an einer drehbaren Deichsel angebrachte schwenkbare Achse, wie sie im Rahmen der FR 2 786 456 A1 beschrieben wird. Dies einfach aus der Erkenntnis heraus, dass es sich bei dem betreffenden Anhänger um einen Einachs-Lastanhänger handelt, welcher eine optionale Deichsel aufweist, die mit einem einzelnen Deichselrad ausgerüstet sein mag. Jedenfalls lassen sich die beiden Anhängerräder der feststehenden Achse mit gleicher oder unterschiedlicher Geschwindigkeit antreiben, so dass ein Geradeauslauf, Rückwärtslauf aber auch jede beliebige Kurvenfahrt des Anhängers realisiert werden kann. Dafür sorgen die beiden Reibradantriebe, die sich mit unterschiedlicher Drehrichtung und/oder Geschwindigkeit antreiben lassen.

Grundsätzlich kann die feststehende Achse an jeder Anhängerseite (beispielsweise in Fahrtrichtung rechts und links) auch mit Zwillingsreifen ausgerüstet werden. Dann wird man im Rahmen der Erfindung jeweils eines dieser Anhängerräder mit dem Reibradantrieb ausrüsten. Es kommen also wiederum zwei Reibradantriebe pro feststehender Achse zum Einsatz. Zusätzlich mag eine weitere schwenkbare Achse (an einer Deichsel) realisiert sein, die jedoch nicht über die Reibradantriebe verfügt.

Der Reibradantrieb kann wahlweise mit den anzutreibenden Anhängerrad in Kontakt gebracht werden. Das geschieht in der Regel erst am Einsatzort. Dagegen findet der Transport zum Einsatzort üblicherweise mit Hilfe eines Zugfahrzeuges statt, ohne dass hierzu der Reibradantrieb eine Beaufschlagung erfährt.

Die beiden Reibradantriebe lassen sich in der Regel mit gleicher oder unterschiedlicher Geschwindigkeit ansteuern, so dass der Anhänger - wie beschrieben - beliebige Fahrstrecken absolvieren kann. Kurven können beispielsweise dadurch realisiert werden, dass das kurveninnere Anhängerrad nur geringfügig angetrieben wird, während das kurvenäußere Anhängerrad eine demgegenüber (viel) größere Geschwindigkeit aufweist. Eine gerade Strecke ist gekennzeichnet durch eine in etwa gleiche Geschwindigkeit beider Anhängerräder.

Vorzugsweise sorgt die Feder, mit deren Hilfe die Antriebseinheit inklusive Antriebswalze an das Fahrgestell angeschlossen ist, dafür, dass in etwa konstante Andruckkraft des jeweiligen Reibradantriebes an das Anhängerrad vorliegt. Dadurch wird erfolgreich Schlupf zwischen der Antriebswalze und dem Anhängerrad vermieden. Tatsächlich ist die Feder von ihrer Andruckkraft her so bemessen, dass auch größere Haftreibungskräfte des Anhängers insgesamt mit Hilfe des Reibradantriebes überwunden werden können, ohne dass es zu nennenswerten Geschwindigkeitsdifferenzen zwischen einerseits der Antriebswalze und andererseits dem Anhängerrad, also einem Schlupf, kommt. In diesem Zusammenhang hat es sich als vorteilhaft erwiesen, wenn die Feder hydraulisch arbeitet, also mit einem Hydraulikmedium wie z.B. Luft gefüllt ist. Auf diese Weise lässt sich die Charakteristik der Feder ganz einfach durch Veränderung des Druckes des Hydraulikmediums bzw. der Luft ändern.

Bei hohem Druck des eingefüllten Mediums ist dementsprechend auch die Andruckkraft groß, während niedriger Druck zu einer verringerten Andruckkraft korrespondiert. Hierdurch ist es sogar möglich, wechselnden Betriebszuständen des Anhängers Rechnung zu tragen. So wird man bei einem leeren Anhänger mit geringen Andruckkräften, folglich einem geringen Druck in der Feder arbeiten, während ein vollbeladener Anhänger eine entsprechende Vergrößerung der Andruckkräfte und dementsprechend Erhöhung des Druckes der Feder erfordert. Grundsätzlich kann diese Druckanpassung der Feder auch im Sinne einer Steuerung bzw. Regelung in Abhängigkeit vom Anhängergewicht automatisch erfolgen. Ebenso ist es denkbar, dass mit Hilfe einer Druckvariation gegebenenfalls Änderungen des Reibwertes der Antriebswalze gegenüber dem Anhängerrad Rechnung getragen wird.

Es versteht sich, dass die Antriebseinheit größtenteils über einen Antrieb, beispielsweise einen Elektroantrieb bzw. Elektromotor und gegebenenfalls ein Getriebe verfügt. Dieses Getriebe mag als Flachgetriebe ausgeführt sein, um einen möglichst kompakten Aufbau zu gewährleisten. Ebenso gut kann es sich bei dem Antrieb auch um einen Gas- oder Druckluftmotor handeln.

Zur Energieversorgung des Antriebes bzw. Elektromotors dient hauptsächlich ein an Bord des Anhängers befindliches Stromaggregat, welches regelmäßig Drehstrom für den als Drehstrommotor ausgeführten Elektromotor zur Verfügung stellt. Genauso gut ist es aber auch denkbar und wird vom Erfindungsgedanken umfasst, als Energiequelle einen Akkumulator einzusetzen, welcher einen Gleichstrommotor als Antrieb beaufschlagt. Ferner sind Gasdruckflaschen als Energiequelle denkbar, beispielsweise mit Wasserstoffgas gefüllte Gasflaschen, die mit Hilfe einer Brennstoffzelle Gleichstrom für den Antrieb erzeugen. Genauso gut kann Erdgas in den Gasdruckbehältern aufgenommen werden, welches einen Gasmotor als Antrieb beaufschlagt.

Damit kein unnötiger Schlupf zwischen der Antriebswalze und dem Anhängerrad auftritt, verfügt die Antriebswalze üblicherweise über eine Reiboberfläche. Diese kann dadurch realisiert werden, dass die zumeist aus Stahl gefertigte Antriebswalze an ihrer Oberfläche mit einer Riffelung versehen ist. Auch Kunststoff- und/oder Gummibeschichtungen lassen sich hier vorteilhaft einsetzen.

Um den Reibradantrieb nur bei Bedarf an das Anhängerrad anzulegen, verfügt der Reibradantrieb über eine Anstellvorrichtung, welche die Antriebswalze an das Anhängerrad andrückt und hiervon wieder entfernt. Die Anstellvorrichtung mag manuell bedienbar mit einer Hebelstange ausgeführt sein. Alternativ oder zusätzlich kann aber auch eine automatische Stelleinrichtung verwirklicht sein. Dann verfügt die Anstellvorrichtung über ein (lineares) Stellglied, welches für die beschriebene Verstellung der Antriebswalze an das Anhängerrad oder hiervon weg sorgt.

Der Reibradantrieb inklusive Antriebseinheit, Antriebswalze, Feder und Anstellvorrichtung mag an einem Fahrgestellunterzug des Anhängers angebracht sein. Auf diese Weise wird kein Bauraum auf dem Fahrgestell verschwendet. Dabei kann der Fahrgestellunterzug einen Dreieckausleger besitzen, welcher ein Ende der Feder trägt, während das andere Ende der Feder an eine Schwenkplatte angelenkt ist, welche die Antriebseinheit inklusive Reibwalze aufnimmt.

An der Schwenkplatte bzw. einer Einhausung aus Schwenkplatte, Befestigungsflansch und Verbindungsstegen ist ein Drehlager vorgesehen, das in Verlängerung der Basis des Dreieckauslegers angeordnet sein mag. Dagegen ist die Feder an die Spitze des Dreieckauslegers angeschlossen. Hierdurch arbeitet die Feder, bei welcher es sich in der Regel um eine Gasdruckfeder handelt, unter leichter Schrägstellung gegenüber dem Fahrgestell auf die Schwenkplatte, so dass sich eine günstige Kinematik und einfache Verstellung ergibt.

Der Schwenkplatte gegenüberliegend ist ein Befestigungsflansch zur Aufnahme des optionalen Getriebes und des Antriebes, also der Antriebseinheit, vorgesehen. Zwischen der Schwenkplatte und dem Befestigungsflansch für die Antriebseinheit wird die Antriebswalze aufgenommen. Zusätzlich können die Schwenkplatte und der Befestigungsflansch durch Verbindungsstege so miteinander gekoppelt sein, dass die Antriebswalze bis auf einen Öffnungsbereich eingehaust ist. Dadurch wird die Unfallgefahr minimiert, weil die Antriebswalze letztlich nur in dem Bereich frei liegt, welcher an das Anhängerrad angedrückt wird.

Bevorzugt ist die Energiequelle als Stromgenerator und die jeweilige Antriebseinheit als Elektromotor, insbesondere Drehstrommotor ausgebildet, was jedoch nicht zwingend ist, wie bereits ausgeführt wurde. Schließlich sorgt eine Fernsteuerung, insbesondere Funkfernsteuerung dafür, dass der Reibradantrieb entsprechend angesteuert wird. Selbstverständlich kann die Fernsteuerung auch sämtliche anderen Funktionen des Anhängers übernehmen.

So trägt der Anhänger im Rahmen des Ausführungsbeispiels mehrere Reinigungsaggregate, so dass der Anhänger insgesamt ein mobiles Reinigungsgerät darstellt. Folglich können die vorerwähnten Reinigungsaggregate - wie der Reibradantrieb - ebenso mit Hilfe der (Funk)Fernsteuerung beispielsweise ein- und ausgeschaltet, also insgesamt gesteuert werden.

Im Ergebnis wird ein Anhänger zur Verfügung gestellt, der zumeist über eine Deichsel verfügt und sich auf diese Weise mit Hilfe eines Zugfahrzeuges an den gewünschten Einsatzort verbringen lässt. Dort wird der Anhänger für den spezifischen Einsatzzweck genutzt, beispielsweise als mobiles Reinigungsgerät. Dieses verfügt über einen eigenen Stromgenerator als Energiequelle, wobei mit Hilfe des solchermaßen erzeugten Drehstromes die als Elektromotoren ausgebildeten Antriebseinheiten beaufschlagt werden.

Mit Hilfe der Fernsteuerung kann nun der Anhänger unter Rückgriff auf den solchermaßen realisierten Selbstfahrantrieb als mobiles Fahrzeug beispielsweise zur Reinigung großer Flächen genutzt werden. Es versteht sich, dass in diesem Zusammenhang zusätzliche Tanks, gefüllt mit Wasser und/oder Reinigungsflüssigkeit, ebenso wie eine Hochdruckquelle optional an Bord sind.

Der Anhänger bewegt sich mit einer Geschwindigkeit von meistens deutlich unter 10 km/h fort und kann mit Hilfe der Fernsteuerung punktgenau gelenkt, gestoppt und gestartet werden. Durch die Möglichkeit, die beiden Reibradantriebe unabhängig voneinander zu beaufschlagen, lässt sich der Anhänger - wie ein Panzer - auf der Stelle wenden.

Im Anhängerbetrieb wird die Fernsteuerung in einer Schublade im Anhänger aufgenommen, so dass etwaige in der Fernsteuerung befindliche Akkumulatoren hierbei geladen werden. Neben einer drahtlosen Fernsteuerung ist selbstverständlich auch eine kabelgebundene Fernsteuerung denkbar und wird vom Erfindungsgedanken umfasst.

So oder so wird insbesondere ein mobiles Reinigungsgerät zur Verfügung gestellt, mit dessen Hilfe sich besonders wirkungsvoll Verschmutzungen wie Öl-, Kaugummi- oder Farbflecken usw. von Straßen-, Pflaster- oder vergleichbaren Oberflächen entfernen lassen. Hierin sind die wesentlichen Vorteile zu sehen.

Im Folgenden wird die Erfindung anhand einer lediglich ein Ausführungsbeispiel darstellenden Zeichnung näher erläutert. Es zeigen:
- Fig. 1: einen erfindungsgemäßen Anhänger in der Ausführungsform als mobiles Reinigungsgerät mit abgenommenem Gehäusedeckel,
- Fig. 2: eine Ansicht auf den Reibradantrieb vom Unterboden des Anhängers aus,
- Fig. 3: eine Aufsicht auf den Reibradantrieb,
- Fig. 4: eine Seitenansicht des Reibradantriebes und
- Fig. 5: die Antriebswalze im Detail.

In den Figuren ist ein Anhänger in der Ausführungsform als Einachs-Lastanhänger mit Deichsel 1 in Gestalt eines mobilen Reinigungsgerätes dargestellt. Selbstverständlich kann der Anhänger auch über mehr als eine Achse verfügen und ist grundsätzlich zum Transport jedweder Lasten geeignet. Im Rahmen der Darstellung trägt der Anhänger einen Stromgenerator 2 als Energiequelle 2 und verfügt über mehrere Tanks 3, die einerseits Reinigungsflüssigkeit, andererseits Brennstoff für den Stromgenerator 2 beinhalten. Mit Hilfe einer wahlweise absenkbaren Reinigungshaube 4 mit integrierten, umlaufenden Reinigungsarmen mit Reinigungsdüsen, lässt sich ein Untergrund U säubern. Das gilt insbesondere im Hinblick auf Öl-, Kaugummiflecken, Farbreste, etc..

Mit Hilfe der Deichsel 1 wird der Anhänger zum Einsatzort von einem Zugfahrzeug befördert. Dort sorgt ein Selbstfahrantrieb 5 dafür, dass der Anhänger als mobiles Reinigungsgerät selbständig vorgegebene Fahrstrecken absolvieren kann. Zu diesem Zweck handelt es sich bei dem Selbstfahrantrieb 5 um einen Reibradantrieb 5 für wenigstens ein Anhängerrad 6.

Im Rahmen des Ausführungsbeispiels sind zwei Reibradantriebe 5 für jeweils ein Anhängerrad 6 an der feststehenden Achse des Einachs-Lastanhängers mit Deichsel 1 und an jeder Anhängerseite realisiert. Die beiden Reibradantriebe 5 laufen mit gleicher oder unterschiedlicher Geschwindigkeit sowie gleich- oder gegensinnig. Auf diese Weise kann der Anhänger beliebige, auch kurvige Fahrstrecken absolvieren.

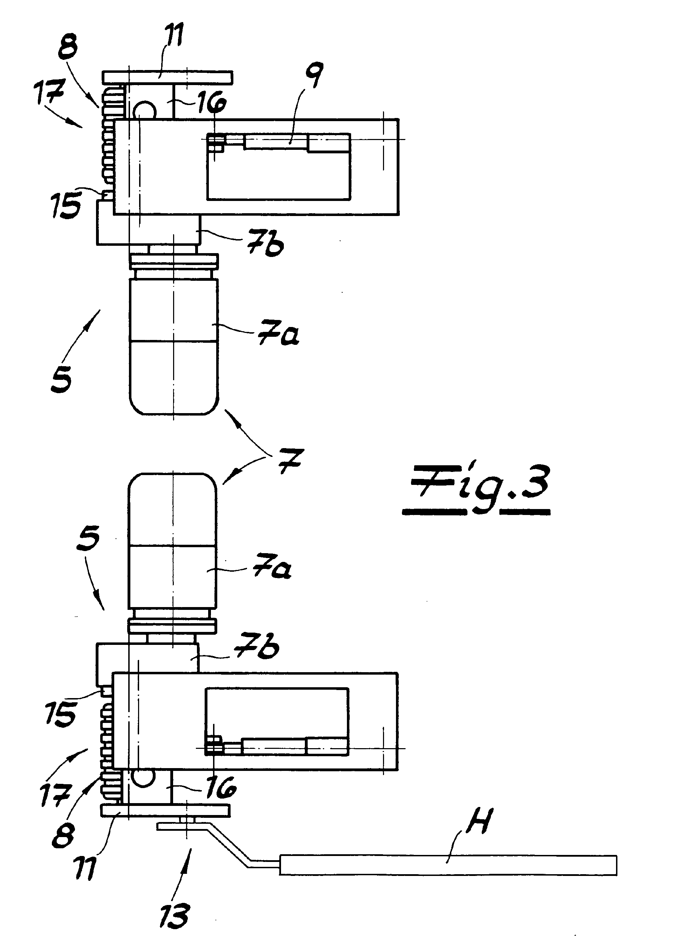

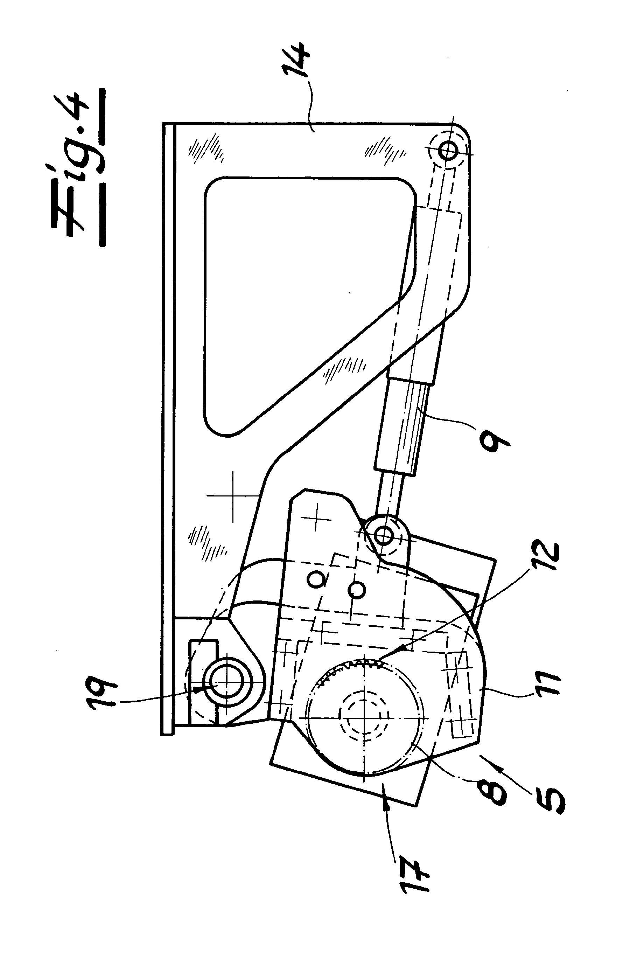

Anhand der Fig. 3 bis 5 erkennt man, dass der Reibradantrieb 5 eine Antriebseinheit 7 inklusive Antriebswalze 8 und eine an die Antriebseinheit 7 inklusive Antriebswalze 8 bzw. an die Antriebswalze 8 angeschlossene Feder 9 aufweist. Bei dieser Feder 9 handelt es sich um eine Gasdruckfeder 9, deren Gasdruck je nach den Erfordernissen variiert werden kann. Mit Hilfe des Gasdruckes wird sichergestellt, dass die Antriebswalze 8 größtenteils schlupffrei auf das Anhängerrad 6 arbeitet. Die Feder 9 stützt sich einerseits gegenüber einem Fahrgestell 10 ab und beaufschlagt andererseits eine Schwenkplatte 11. Insgesamt sorgt die Feder 9 für eine in etwa konstante Andruckkraft der Antriebswalze 8 bzw. der Antriebseinheit 7 inklusive Antriebswalze 8 an das Anhängerrad 6.

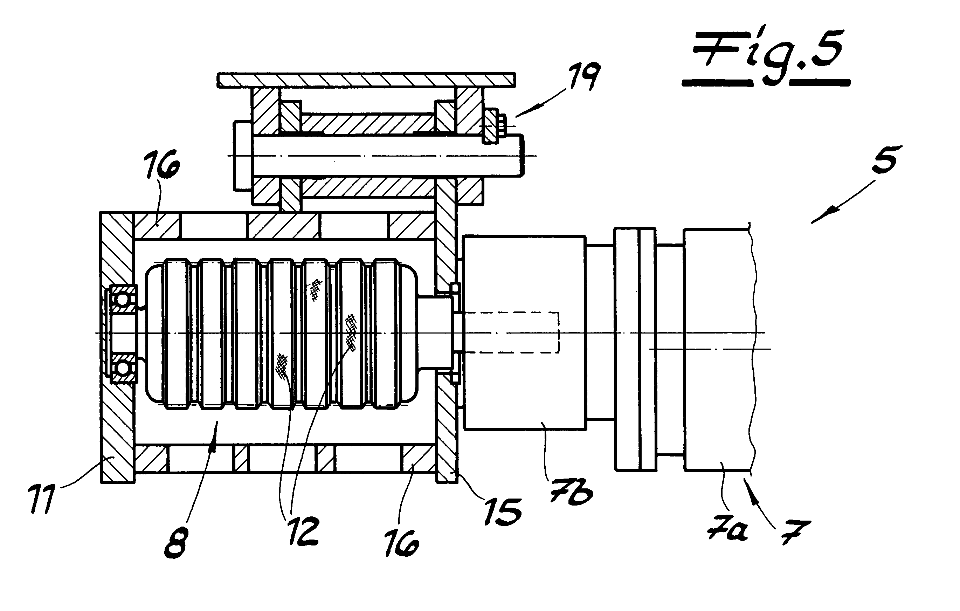

Anhand der Fig. 5 erkennt man, dass die Antriebswalze 8 eine Reiboberfläche 12 aufweist. Tatsächlich sind mehrere konzentrische Ringe vorgesehen, die zur Darstellung der Reiboberfläche 12 Zähne bzw. eine Verzahnung tragen. Unterstützend kann hier auch eine Beschichtung wirken.

Der Reibradantrieb 5 verfügt über eine Anstellvorrichtung 13, die dafür sorgt, dass die Antriebswalze 8 an das Anhängerrad 6 angelegt und hiervon wieder entfernt wird. Im Rahmen des Ausführungsbeispiels arbeitet die Anstellvorrichtung 13 manuell und verfügt zu diesem Zweck über eine Hebelstange H, die sich nach Gebrauch entfernen lässt.

Mit Hilfe der Hebelstange H kann ein Bediener die Schwenkplatte 11 und damit die Antriebswalze 8 (und den Antrieb bzw. die Antriebseinheit 7) an die beiden Anhängerräder 6 andrücken. Zuvor muss der Bediener jedoch eine mechanische Sicherung lösen, die bei wieder vom Antriebsrad 6 entferntem Reibradantrieb 5 dafür sorgt, dass der Reibradantrieb 5 nicht unbeabsichtigt gegen die beiden Antriebsräder 6 angelegt wird.

Grundsätzlich kann anstelle der manuell bedienbaren Anstellvorrichtung 13 aber auch eine nicht dargestellte automatisch wirkende Anstellvorrichtung 13 realisiert sein, die über eine entsprechend gestaltete Stelleinrichtung verfügt.

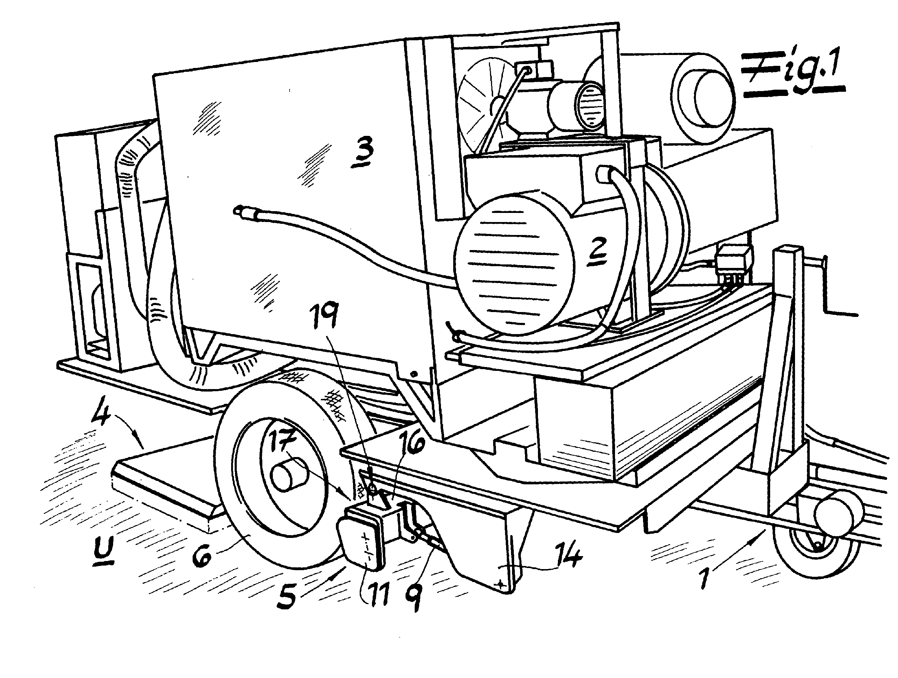

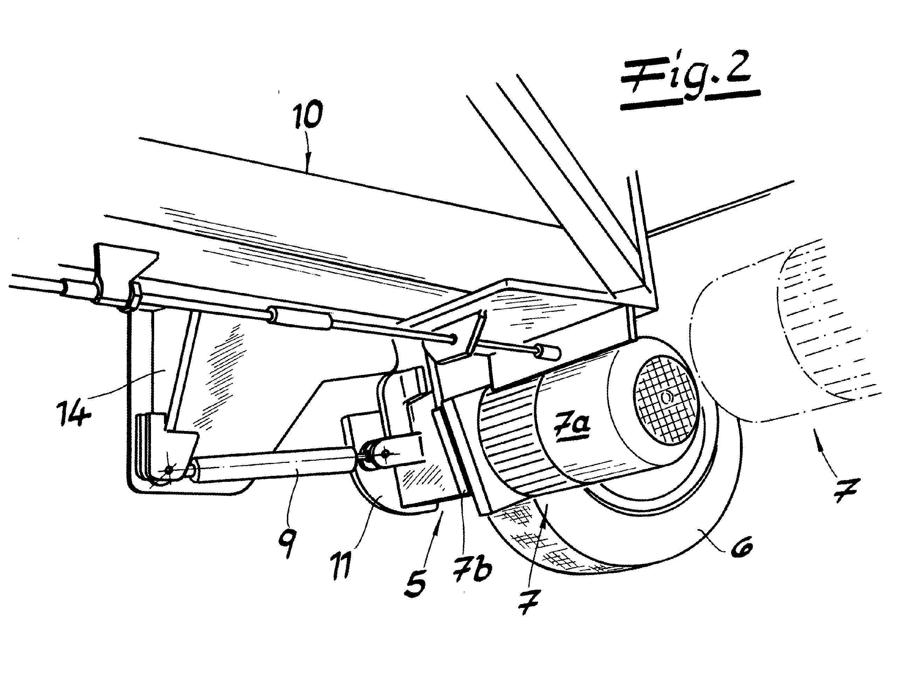

Anhand der Fig. 1 und 2 erkennt man, dass der Reibradantrieb 5 inklusive Antriebseinheit 7, Antriebswalze 8, Feder 9 und Anstellvorrichtung 13 an einem Fahrgestellunterzug bzw. einem Unterzug des Fahrgestells 10 des Anhängers angebracht ist. Der Fahrgestellunterzug verfügt über einen Dreieckausleger 14, welcher ein Ende der Feder 9 trägt. Das andere Ende der Feder 9 ist - wie bereits ausgefügt - an die Schwenkplatte 11 angelenkt, welche die Antriebseinheit 7 inklusive Antriebswalze 8 aufnimmt.

Im Rahmen des Ausführungsbeispiels setzt sich die Antriebseinheit 7 aus einem Elektromotor bzw. Drehstrommotor 7a und einem Flachgetriebe 7b zusammen, die als Baugruppe von einem Befestigungsflansch 15 getragen werden. Der Befestigungsflansch 15 nimmt zusammen mit der Schwenkplatte 11 die Antriebswalze 8 zwischen sich auf, die ausweislich der Fig. 5 in beiden Platten 11, 15 jeweils endseitig gelagert ist.

Schwenkplatte 11 und Befestigungsflansch 15 für die Antriebseinheit 7 sind miteinander gekoppelt, und zwar über Verbindungsstege 16. Die Verbindungsstege 16 hausen zusammen mit der Schwenkplatte 11 und dem Befestigungsflansch 15 die Antriebswalze 8 ein, wobei lediglich ein Öffnungsbereich 17 verbleibt. Dieser Öffnungsbereich 17 ist dem jeweiligen Antriebsrad 6 zugewandt und stellt sicher, dass

## Patentansprüche

1. Anhänger, insbesondere Einachs-Lastanhänger mit Deichsel (1), mit einer Energiequelle (2) und wenigstens einem Selbstfahrantrieb (5), welcher als Reibradantrieb (5) für ein Anhängerrad (6) ausgebildet ist, wobei zumindest
der Reibradantrieb (5) eine Antriebseinheit (7) inklusive Antriebswalze (8) und zusätzlich eine angeschlossene Feder (9) aufweist, welche sich gegenüber einem Fahrgestell (10) abstützt, und wobei
zwei oder mehr Reibradantriebe (5) vorgesehen sind,
**dadurch gekennzeichnet, dass**
jeweils ein Reibradantrieb (5) für je ein Anhängerrad (6) einer feststehenden Achse an jeder Anhängerseite realisiert ist, wobei die beiden Reibradantriebe (5) mit gleicher oder unterschiedlicher Geschwindigkeit laufen, so dass der Anhänger beliebige Fahrstrecken absolvieren kann.

2. Anhänger nach Anspruch 1, **dadurch gekennzeichnet, dass** die an die Antriebseinheit (7) inklusive Antriebswalze (8) und sich gegenüber dem Fahrgestell (10) abstützende Feder (9) für in etwa konstante Andruckkraft an das Anhängerrad (6) sorgt.

3. Anhänger nach Anspruch 1 oder 2, **dadurch gekennzeichnet, dass** die Antriebswalze (8) eine Reiboberfläche (12) besitzt.

4. Anhänger nach einem der Ansprüche 1 bis 3, **dadurch gekennzeichnet, dass** der Reibradantrieb (5) eine Anstellvorrichtung (13) aufweist, welche die Antriebswalze (8) an das Anhängerrad (6) anlegt und hiervon wieder entfernt.

5. Anhänger nach einem der Ansprüche 1 bis 5, **dadurch gekennzeichnet, dass** der Reibradantrieb (5) inklusive Antriebseinheit (7), Antriebswalze (8), Feder (9) und Anstellvorrichtung (13) an einem Fahrgestellunterzug des Anhängers angebracht ist.

6. Anhänger nach einem der Ansprüche 1 bis 5, **dadurch gekennzeichnet, dass** der Fahrgestellunterzug einen Dreieckausleger (14) aufweist, welcher ein Ende der Feder (9) trägt, während deren anderes Ende an eine Schwenkplatte (11) angelenkt ist, welche die Antriebseinheit (7) inklusive Antriebswalze (8) aufnimmt.

7. Anhänger nach einem der Ansprüche 1 bis 6, **dadurch gekennzeichnet, dass** ein Drehlager (19) im Bereich der Schwenkplatte (11) in Verlängerung der Basis des Dreieckauslegers (14) angeordnet ist.

8. Anhänger nach einem der Ansprüche 1 bis 7, **dadurch gekennzeichnet, dass** die Schwenkplatte (11) zusammen mit einem Befestigungsflansch (15) für die Antriebseinheit (7) die Antriebswalze (8) zwischen sich aufnimmt.

9. Anhänger nach Anspruch 8, **dadurch gekennzeichnet, dass** die Schwenkplatte (11) und der Befestigungsflansch (15) durch Verbindungsstege (16) so miteinander gekoppelt sind, dass die Antriebswalze (8) bis auf einen Öffnungsbereich (17) eingehaust ist.

10. Anhänger nach einem der Ansprüche 1 bis 9, **dadurch gekennzeichnet, dass** die Energiequelle (2) als Stromgenerator (2) und die jeweilige Antriebseinheit (7) als Elektromotor, insbesondere Drehstrommotor (7a), ausgebildet ist.
